# EUROPEAN PATENT SPECIFICATION

(11) **EP 2 238 746 B1**
(45) Date of publication and mention of the grant of the patent: **20.06.2018**
(21) Application number: 08842795.0
(22) Date of filing: 14.10.2008
(51) Int. Cl.: H04N 5/445

(54) **NAVIGATION IN PROGRAM GUIDES WITH NON-UNIFORM EVENTS**
NAVIGATION IN PROGRAMMANLEITUNGEN MIT UNGLEICHFÖRMIGEN EREIGNISSEN
NAVIGATION DANS DES GUIDES DE PROGRAMMES À ÉVÉNEMENTS NON UNIFORMES

(30) Priority: 24.10.2007 US 923021
(43) Date of publication of application: 13.10.2010
(73) Proprietor: Cisco Technology, Inc., San Jose, CA 95134 (US)
(72) Inventor: STALKER, Altan, Lawrenceville, Georgia 30043 (US); RUHL, Timothy J., Dacula, Georgia 30019 (US); LEAKE, Russell, Atlanta, Georgia 30315 (US); WOOLF, Fred, Lawrenceville, Georgia 30044 (US); PATEL, Dashant, Lawrenceville, Georgia 30043 (US)
(74) Representative: Mathys & Squire LLP
(86) International application number: PCT/US2008/079767
(87) International publication number: WO 2009/055273

(56) References cited:
- WO-A-2007/010433
- US-A1- 2004 100 485
- US-A1- 2004 250 280

## Description

### TECHNICAL FIELD

The present invention relates to rendering of user interface screens and, more particularly, relates to providing an electronic program guide for use in a subscription television system where a user is permitted to select programs from the electronic program guide.

### BACKGROUND OF THE INVENTION

Subscription television systems typically include an electronic program guide (EPG). With the development of interactive digital set-top boxes (STBs), a new type of advanced multimedia EPGs were developed which may be referred to sometimes as interactive program guides (IPGs). Today, the acronyms EPG and IPG may be used interchangeably.

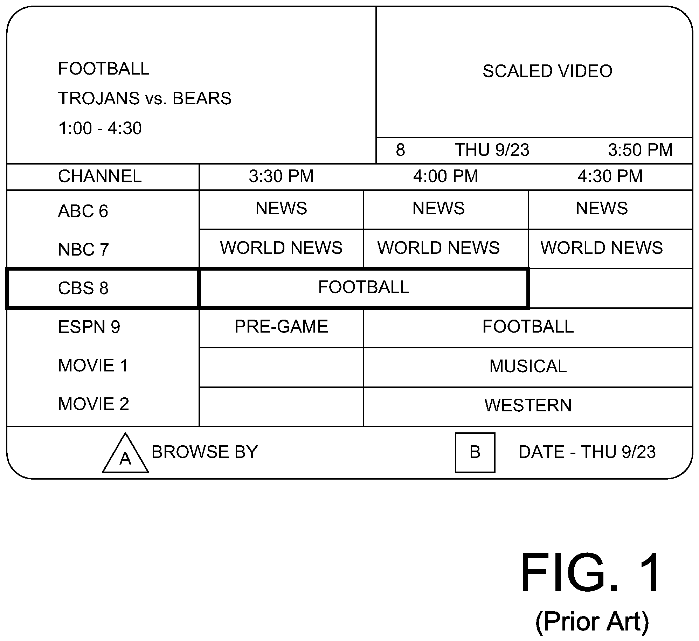

The IPG provides an onscreen display of a program grid menu that includes a program lineup and episode information for every channel for the next several days. The program grid menu may be arranged in various ways. The program grid menu itself is a user interface where the user may navigate the program grid menu using arrow keys on a remote. For example, Fig. 1 illustrates a typical IPG having a program grid menu based on available channel and time information. The user can navigate or scroll through the list of programs within the selected time slot until the desired program is highlighted. Typically, a field in the IPG is shown as being highlighted by using a different color background relative the backgrounds of any other field. In such case, the selectable field may be referred to as a pill.

Once the desired field is highlighted as a selectable item, the user may select the highlighted field using the select button on the remote. In Fig. 1, the user has highlighted the field corresponding with the program titled "Football" which, in turn, corresponds with SPORTS 1 channel 1937. The surrounding boundary or edges of the field corresponding with "Football" have been bolded to depict being highlighted. The boundaries of other fields associated with the highlighted field may also be bolded such as the corresponding channel and time.

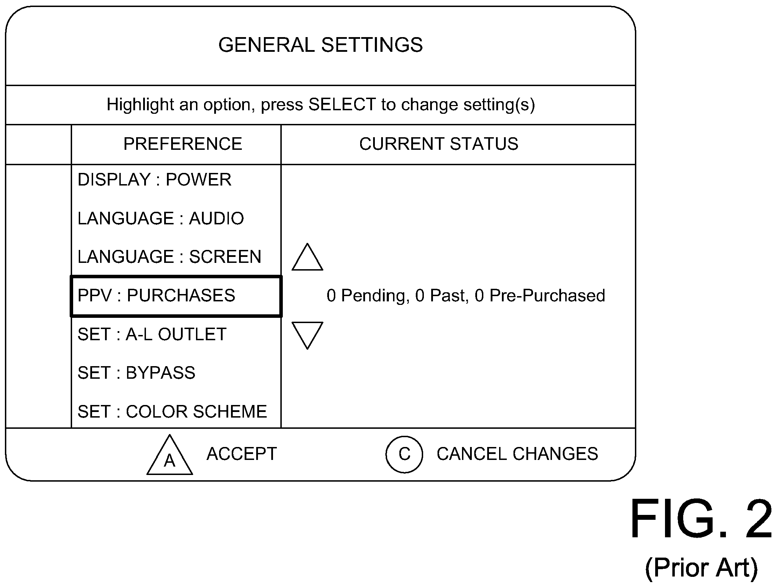

Fig. 2 also illustrates a menu of options in which the user may interface. The user may scroll through a list of preferences until the desired field is highlighted. The highlighted field becomes selectable and therefore may be referred to as active. The user may then select that option to change its current status. Bolding is used again in Fig. 2 to depict the Pay-Per-View (PPV) Purchases option being highlighted. Although Figs. 1 and 2 illustrate two particular examples where a field is highlighted within the IPG, today's IPGs include hundreds or even thousands of possibilities which the user may scroll through, highlight and select.

However, there are times when programs in the program list do not start or end on typical time boundaries such as every 30 minutes or every hour. The programs could have irregular and non-uniform program lengths, or run times, which creates difficulty when scrolling back and forth through the program guide and highlighting a program instance the user desires to select. A new method is needed to linearly direct or redirect the highlight effect in program guides with non-uniform events.

US 2004/4100485 discloses techniques for EPG navigation, including a point-based approach which uses an information line to indicate the active point in time. Similar approaches are disclosed in US 2004/250280 and US 2004/0055007.

Aspects of the invention are set out in the independent claims. Certain preferred features are set out in the dependent claims.

### BRIEF DISCRIPTION OF THE DRAWINGS

Fig. 1 illustrates a screen-shot of a prior art graphical user interface screen depicting a selectable item.
Fig. 2 illustrates a screen-shot of another prior art graphical user interface screen depicting a selectable item.
Fig. 3 illustrates a screen-shot of a graphical user interface of a program guide 300 having non-uniform program start and end times.
Fig. 4 illustrates a screen-shot of a program grid 400 with the highlight effect moving along a horizontal bias line.
Fig. 5 illustrates a screen-shot of a program grid 500 with the highlight effect moving along a vertical bias line.

### DETAILED DESCRIPTION

The present invention will be described more fully hereinafter with reference to the accompanying drawings in which like numerals represent like elements throughout the several figures, and in which an exemplary embodiment of the invention is shown. This invention may, however, be embodied in many different forms and should not be construed as being limited to the embodiments set forth herein; rather, the embodiments are provided so that this disclosure will be thorough and complete, and will fully convey the scope of the invention to those skilled in the art. The present invention is described more fully hereinbelow.

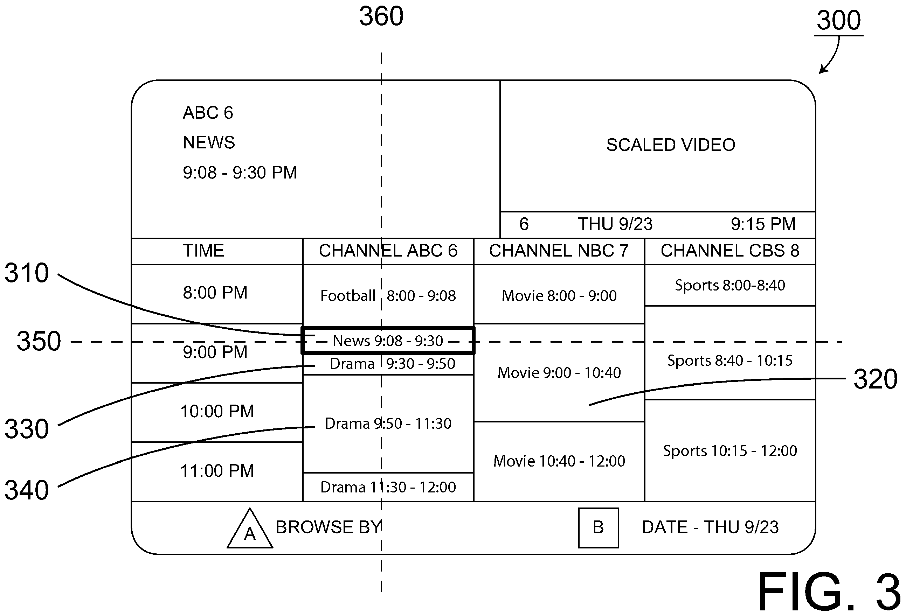

Fig. 3 illustrates a screen-shot of a graphical user interface of a program guide 300 having non-uniform program length, or run times. For example, the news program 310 begins at 9:08 pm and ends at 9:30 pm. When using the highlight effect, a user scrolls through the program grid 300 using input from a remote control, such as the arrow buttons. With non-uniform program start and end times, the highlight effect will not always work correctly when scrolling back towards a previously highlighted or active program instance. For example, if a user scrolls to the right and highlights a movie program 320 shown from 9 pm to 10:40 pm, it is uncertain to the user what happens when the user then scrolls back to the left. The highlight effect could highlight either the news program 310 from 9:08 pm to 9:30 pm, a drama program 330 from 9:30 pm to 9:50 pm, or a drama program 340 from 9:50 pm to 11:30 pm. Without an appropriate algorithm to direct or redirect which program instance will be selectable and active, the highlighted program may drift downward or upward as the user scrolls back through the program grid.

In order to provide an appropriate algorithm, a horizontal bias line 350 and a vertical bias line 360 can be calculated. These bias lines 350, 360 will be calculated when the program grid 300 is first displayed. The bias lines 350, 360 are calculated by computing the center of the viewable area of the field of the currently highlighted program and extending lines horizontally and vertically therefrom. For example, when a user first views the program grid 300, the field of the currently highlighted program is the news program 310 on channel 6. Therefore, the horizontal bias line 350 extends horizontally from the center of the news program 310 and the vertical bias line 360 extends vertically from the center of the news program 310. The user can specify whether the horizontal and vertical bias lines appear to the user when viewing the program grid.

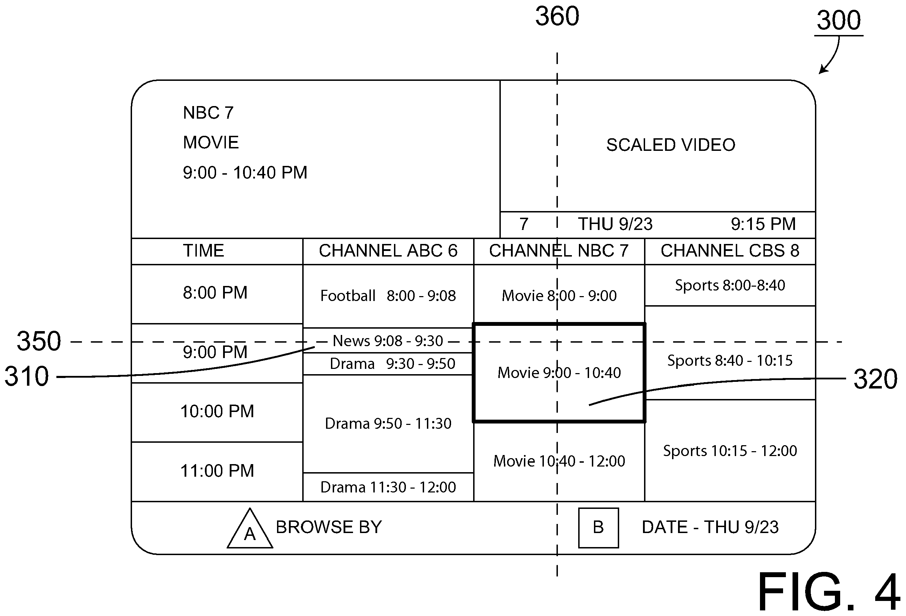

Fig. 4 illustrates a screen-shot of a program grid 300 with the highlight effect moving along a horizontal bias line. The program grid 300 depicts channels on the horizontal axis (y-axis) and time on the vertical axis (x-axis). When the user scrolls to the right from the news program 310, the first program that intersects the horizontal bias line 350 becomes highlighted. Therefore, the movie program 320 from 9 pm to 10:40 pm is now highlighted. The vertical bias line 360 is recalculated each time the user scrolls in a horizontal direction. Once the movie program 320 is highlighted, the position of the vertical bias line 360 is now recalculated and moved. If the user then scrolled back to the left, the first program that intersects with the horizontal bias line 350 is the news program 310 and the position of the vertical bias line 360 would be recalculated. In this instance, the horizontal bias line 350 is not recalculated. If the user were to scroll up or down, the horizontal bias line 350 would be recalculated.

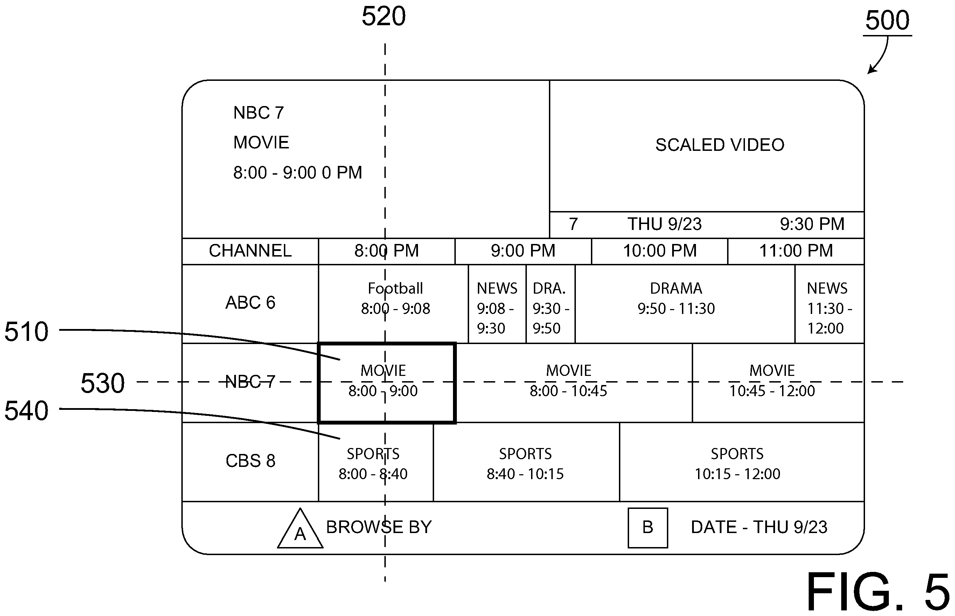

Fig. 5 illustrates a screen-shot of a program grid 500 with the highlight effect moving along a vertical bias line. The program grid 500 depicts channels on the vertical axis (y-axis) and time on the horizontal axis (x-axis). When a user first views the program grid 500, the current program, for example, is a movie program 510 on channel 7. Therefore, a vertical bias line 520 extends vertically from the center of the highlighted field of the movie program 510 and a horizontal bias line 530 extends horizontally from the center of the highlighted field of the movie program 510. When the user scrolls down from the movie program 510, the first program that intersects the vertical bias line 520 becomes highlighted. Therefore, when scrolling down from the movie program 510, a sports program 540 on channel 8 is highlighted. The horizontal bias line 530 is recalculated each time the user scrolls up and down, but the position of the vertical bias line 520 remains the same. If the user scrolled to the right, the position of the vertical bias line 520 would have to be recalculated.

Vertical and horizontal bias lines are calculated to determine which program to select when navigating in a program guide having programs with non-uniform run times. Run time is the variable. Therefore if time is displayed on the y-axis, when scrolling right to left in the program gird only the vertical bias line needs to be recalculated. Because the channel information is uniform, the horizontal bias line does not need to be recalculated when moving right to left. Calculating and recalculating the position of the vertical bias line allows a user to linearly direct the highlight effect when scrolling through the program grid.

The foregoing has broadly outlined some of the more pertinent aspects and features of the present invention. These should be construed to be merely illustrative of some of the more prominent features and applications of the invention. Other beneficial results can be obtained by applying the disclosed information in a different manner or by modifying the disclosed embodiments. Accordingly, other aspects and a more comprehensive understanding of the invention may be obtained by referring to the detailed description of the exemplary embodiments taken in conjunction with the accompanying drawings, in addition to the scope of the invention defined by the claims.

## Claims

1. An electronic program guide (EPG) comprising:
a user interface screen displaying program information in fields on a grid layout (300) having channel information and run time information displayed along respective axes of the grid layout, wherein at least some of said fields correspond with program instances having non-uniform run times relative to each other; **characterized in that** the EPG comprises:
means for computing a vertical bias line (360) extending vertically from the center of a first, currently highlighted, field (310) in the grid and a horizontal bias line (350) extending horizontally from the center of the first, currently highlighted, field in the grid;
means for, in response to scrolling by a user in a given one of the horizontal and vertical directions, highlighting the next field (320) that intersects the respective bias line along the given direction; and
means for maintaining the position of said respective bias line and recalculating the other one of the bias lines.

2. The EPG of claim 1, wherein the next field corresponds to a program instance having a different program length than said program instance corresponding to said first field.

3. The EPG of claim 1, wherein said channel information is displayed on an x-axis and said time information is displayed on a y-axis.

4. The EPG of claim 3, wherein said recalculated bias line is said vertical bias line.

5. The EPG of claim 1, wherein said channel information is displayed on a y-axis and said time information is displayed on an x-axis.

6. The EPG of claim 5, wherein said recalculated bias line is said horizontal bias line.

7. The EPG of claim 1, wherein said recalculated bias line is recalculated a third time as a result of scrolling back to said first field.

8. The EPG of claim 7, wherein said bias line is recalculated for the third time is in the same position as said bias line corresponding to said first field.

9. A method for navigating through an electronic program guide (EPG), said method comprising the following steps:
displaying program information in fields on a grid layout (300);
displaying channel information on an x-axis;
displaying non-uniform time information on a y-axis;
**characterized in that** the method further comprises:
calculating a vertical bias line (360) extending vertically from the center of a currently highlighted field (310) in the grid and a horizontal bias line (350) extending horizontally from the center of the currently highlighted field;
a user navigating through a plurality of fields of said EPG;
in response to navigating away from a highlighted program instance in a direction on the x-axis, highlighting the next field (320) that intersects the horizontal bias line, maintaining the position of the horizontal bias line, and recalculating said vertical bias line.

10. The method of claim 9, further comprising the step of navigating to a program instance on said x-axis with a run time different than said previously highlighted program instance.

11. The method of claim 9, further comprising the steps of navigating back to said previously highlighted program instance and recalculating said vertical bias line without recalculating said horizontal bias line.

12. A method for navigating through an electronic program guide (EPG), said method comprising the following steps:
displaying program information in fields on a grid layout (300);
displaying channel information on a y-axis;
displaying non-uniform time information on an x-axis;
**characterized in that** the method further comprises:
calculating a vertical bias line (360) extending vertically from the center of a currently highlighted field (310) in the grid and a horizontal bias line (350) extending horizontally from the center of the currently highlighted field;
a user navigating through a plurality of fields of said EPG;
in response to navigating away from a highlighted program instance in a direction on the y-axis, highlighting the next field (320) that intersects the vertical bias line, maintaining the position of the vertical bias line, and recalculating said horizontal bias line.

13. The method of claim 12, further comprising the step of navigating to a program instance on said y-axis with a run time different than said previously highlighted program instance.

14. The method of claim 12, further comprising the steps of navigating back to said previously highlighted program instance and recalculating said vertical bias line without recalculating said horizontal bias line.

## Patentansprüche

1. Elektronischer Programmführer (EPG), der Folgendes umfasst:
einen Benutzeroberflächenschirm, der Programminformationen in Feldern auf einer Rasteranordnung (300) mit Kanalinformationen und Laufzeitinformationen anzeigt, die entlang jeweiligen Achsen der Rasteranordnung angezeigt werden, wobei wenigstens einige der genannten Felder Programminstanzen mit ungleichförmigen Laufzeiten relativ zueinander entsprechen, **dadurch gekennzeichnet, dass** der EPG Folgendes umfasst:
Mittel zum Berechnen einer vertikalen Bias-Linie (360), die vertikal von der Mitte eines ersten, aktuell hervorgehobenen Feldes (310) in dem Raster verläuft, und einer horizontalen Bias-Linie (350), die horizontal von der Mitte des ersten, aktuell hervorgehobenen Feldes in dem Raster verläuft;
Mittel zum Hervorheben, als Reaktion darauf, dass ein Benutzer in einer gegebenen einen der horizontalen und vertikalen Richtungen scrollt, des nächstes Feldes (320), das die jeweilige Bias-Linie in der gegebenen Richtung schneidet; und
Mittel zum Halten der Position der genannten jeweiligen Bias-Linie und zum Neuberechnen der anderen der Bias-Linien.

2. EPG nach Anspruch 1, wobei das nächste Feld einer Programminstanz mit einer anderen Programmlänge entspricht als die genannte Programminstanz entsprechend dem genannten ersten Feld.

3. EPG nach Anspruch 1, wobei die genannten Kanalinformationen auf einer x-Achse angezeigt werden und die genannten Zeitinformationen auf einer y-Achse angezeigt werden.

4. EPG nach Anspruch 3, wobei die genannte neu berechnete Bias-Linie die genannte vertikale Bias-Linie ist.

5. EPG nach Anspruch 1, wobei die genannten Kanalinformationen auf einer y-Achse angezeigt werden und die genannten Zeitinformationen auf einer x-Achse angezeigt werden.

6. EPG nach Anspruch 5, wobei die genannte neu berechnete Bias-Linie die genannte horizontale Bias-Linie ist.

7. EPG nach Anspruch 1, wobei die genannte neu berechnete Bias-Linie ein drittes Mal infolge des Zurückscrollens zu dem genannten ersten Feld neu berechnet wird.

8. EPG nach Anspruch 7, wobei die genannte Bias-Linie zum dritten Mal in derselben Position neu berechnet wird wie die genannte Bias-Linie entsprechend dem genannten ersten Feld.

9. Verfahren zum Navigieren durch einen elektronischen Programmführer (EPG), wobei das genannte Verfahren die folgenden Schritte beinhaltet:
Anzeigen von Programminformationen in Feldern auf einer Rasteranordnung (300);
Anzeigen von Kanalinformationen auf einer x-Achse;
Anzeigen von ungleichförmigen Zeitinformationen auf einer y-Achse;
**dadurch gekennzeichnet, dass** das Verfahren ferner Folgendes beinhaltet:
Berechnen einer vertikalen Bias-Linie (360), die vertikal von der Mitte eines aktuell hervorgehobenen Feldes (310) in dem Raster verläuft, und einer horizontalen Bias-Linie (350), die horizontal von der Mitte des aktuell hervorgehobenen Feldes verläuft;
Navigieren, durch einen Benutzer, durch mehrere Felder des genannten EPG;
Hervorheben, als Reaktion auf das Wegnavigieren von einer hervorgehobenen Programminstanz in einer Richtung auf der x-Achse, des nächsten Feldes (320), das die horizontale Bias-Linie schneidet, um die Position der horizontalen Bias-Linie zu halten, und Neuberechnen der genannten vertikalen Bias-Linie.

10. Verfahren nach Anspruch 9, das ferner den Schritt des Navigierens zu einer Programminstanz auf der genannten x-Achse mit einer Laufzeit beinhaltet, die sich von der der genannten zuvor hervorgehobenen Programminstanz unterscheidet.

11. Verfahren nach Anspruch 9, das ferner die Schritte des Zurücknavigierens zu der genannten zuvor hervorgehobenen Programminstanz und des Neuberechnens der genannten vertikalen Bias-Linie beinhaltet, ohne die genannte horizontale Bias-Linie neu zu berechnen.

12. Verfahren zum Navigieren durch einen elektronischen Programmführer (EPG), wobei das genannte Verfahren die folgenden Schritte beinhaltet:
Anzeigen von Programminformationen in Feldern auf einer Rasteranordnung (300);
Anzeigen von Kanalinformationen auf einer y-Achse;
Anzeigen von ungleichförmigen Zeitinformationen auf einer x-Achse;
**dadurch gekennzeichnet, dass** das Verfahren ferner Folgendes beinhaltet:
Berechnen einer vertikalen Bias-Linie (360), die vertikal von der Mitte eines aktuell hervorgehobenen Feldes (310) in dem Raster verläuft, und einer horizontalen Bias-Linie (350), die horizontal von der Mitte des aktuell hervorgehobenen Feldes verläuft;
Navigieren, durch einen Benutzer, durch mehrere Felder des genannten EPG;
Hervorheben, als Reaktion auf das Wegnavigieren von einer hervorgehobenen Programminstanz in einer Richtung auf der y-Achse, des nächsten Feldes (320), das die vertikale Bias-Linie schneidet, Halten der Position der vertikalen Bias-Line und Neuberechnen der genannten horizontalen Bias-Linie.

13. Verfahren nach Anspruch 12, das ferner den Schritt des Navigierens zu einer Programminstanz auf der genannten y-Achse mit einer Laufzeit beinhaltet, die sich von der der genannten zuvor hervorgehobenen Programminstanz unterscheidet.

14. Verfahren nach Anspruch 12, das ferner die Schritte des Zurücknavigierens zu der genannten zuvor hervorgehobenen Programminstanz und des Neuberechnens der genannten vertikalen Bias-Linie beinhaltet, ohne die genannte horizontale Bias-Linie neu zu berechnen.

## Revendications

1. Guide EPG (electronic program guide - guide électronique de programmes) comportant :
un écran d'interface utilisateur servant à afficher des informations se rapportant à des programmes dans des champs dans un format de grille (300) ayant des informations se rapportant à des chaînes et des informations se rapportant à des temps d'exécution affichées le long d'axes respectifs du format de grille, dans lequel au moins certains desdits champs correspondent à des instances de programme ayant des temps d'exécution non uniformes les unes par rapport aux autres ; **caractérisé en ce que** le guide EPG comporte :
un moyen servant à calculer une ligne de polarisation verticale (360) s'étendant à la verticale depuis le centre d'un premier champ actuellement mis en évidence (310) dans la grille et une ligne de polarisation horizontale (350) s'étendant à l'horizontale depuis le centre du premier champ actuellement mis en évidence dans la grille ;
un moyen servant à, en réponse à un défilement par un utilisateur dans une direction donnée parmi les directions horizontale et verticale, mettre en évidence le champ suivant (320) qui croise la ligne de polarisation respective le long de la direction données ; et
un moyen servant à maintenir la position de ladite ligne de polarisation respective et à recalculer l'autre des lignes de polarisation.

2. Guide EPG selon la revendication 1, dans lequel le champ suivant correspond à une instance de programme ayant une longueur de programme différente de ladite instance de programme correspondant audit premier champ.

3. Guide EPG selon la revendication 1, dans lequel lesdites informations se rapportant à des chaînes sont affichées sur un axe x et lesdites informations se rapportant à des temps sont affichées sur un axe y.

4. Guide EPG selon la revendication 3, dans lequel ladite ligne de polarisation recalculée est ladite ligne de polarisation verticale.

5. Guide EPG selon la revendication 1, dans lequel lesdites informations se rapportant à des chaînes sont affichées sur un axe y et lesdites informations se rapportant à des temps sont affichées sur un axe x.

6. Guide EPG selon la revendication 5, dans lequel ladite ligne de polarisation recalculée est ladite ligne de polarisation horizontale.

7. Guide EPG selon la revendication 1, dans lequel ladite ligne de polarisation recalculée est recalculée une troisième fois suite au défilement de retour jusqu'audit premier champ.

8. Guide EPG selon la revendication 7, dans lequel ladite ligne de polarisation qui est recalculée pour la troisième fois est dans la même position que ladite ligne de polarisation correspondant audit premier champ.

9. Procédé de navigation au travers d'un guide EPG (electronic program guide - guide électronique de programmes), ledit procédé comportant les étapes suivantes consistant à :
afficher des informations se rapportant à des programmes dans des champs dans un format de grille (300) ;
afficher des informations se rapportant à des chaînes sur un axe x ;
afficher des informations non uniformes se rapportant à des temps sur un axe y ;
**caractérisé en ce que** le procédé comporte par ailleurs les étapes consistant à :
calculer une ligne de polarisation verticale (360) s'étendant à la verticale depuis le centre d'un champ actuellement mis en évidence (310) dans la grille et une ligne de polarisation horizontale (350) s'étendant à l'horizontale depuis le centre du champ actuellement mis en évidence ;
naviguer, par l'action d'un utilisateur, au travers d'une pluralité de champs dudit guide EPG ;
en réponse à l'étape consistant à naviguer à distance d'une instance de programme mise en évidence dans une direction sur l'axe x, mettre en évidence le champ suivant (320) qui croise la ligne de polarisation horizontale, maintenir la position de la ligne de polarisation horizontale, et recalculer ladite ligne de polarisation verticale.

10. Procédé selon la revendication 9, comportant par ailleurs l'étape consistant à naviguer jusqu'à une instance de programme sur ledit axe x avec un temps d'exécution différent par rapport à ladite instance de programme précédemment mise en évidence.

11. Procédé selon la revendication 9, comportant par ailleurs les étapes consistant à naviguer jusqu'à ladite instance de programme précédemment mise en évidence et à recalculer ladite ligne de polarisation verticale sans recalculer ladite ligne de polarisation horizontale.

12. Procédé servant à naviguer au travers d'un guide EPG (electronic program guide - guide électronique de programmes), ledit procédé comportant les étapes suivantes consistant à :
afficher des informations se rapportant à des programmes dans des champs dans un format de grille (300) ;
afficher des informations se rapportant à des chaînes sur un axe y ;
afficher des informations non uniformes se rapportant à des temps sur un axe x ;
**caractérisé en ce que** le procédé comporte par ailleurs les étapes consistant à :
calculer une ligne de polarisation verticale (360) s'étendant à la verticale depuis le centre d'un champ actuellement mis en évidence (310) dans la grille et une ligne de polarisation horizontale (350) s'étendant à l'horizontale depuis le centre du champ actuellement mis en évidence ;
naviguer, par l'action d'un utilisateur, au travers d'une pluralité de champs dudit guide EPG ;
en réponse à l'étape consistant à naviguer à distance d'une instance de programme mise en évidence dans une direction sur l'axe y, mettre en évidence le champ suivant (320) qui croise la ligne de polarisation verticale, maintenir la position de la ligne de polarisation verticale, et recalculer ladite ligne de polarisation horizontale.

13. Procédé selon la revendication 12, comportant par ailleurs l'étape consistant à naviguer jusqu'à une instance de programme sur ledit axe y avec un temps d'exécution différent par rapport à ladite instance de programme précédemment mise en évidence.

14. Procédé selon la revendication 12, comportant par ailleurs les étapes consistant à naviguer jusqu'à ladite instance de programme précédemment mise en évidence et à recalculer ladite ligne de polarisation verticale sans recalculer ladite ligne de polarisation horizontale.
